# EUROPEAN PATENT SPECIFICATION

(11) **EP 2 066 547 B1**
(45) Date of publication and mention of the grant of the patent: **10.03.2010**
(21) Application number: 07834543.6
(22) Date of filing: 14.09.2007
(51) Int. Cl.: B62B 7/14, A47D 13/02, B60N 2/28

(54) **DEVICE FOR A PRAM AND USE OF A PUSH BAR**
VORRICHTUNG FÜR EINEN KINDERWAGEN UND VERWENDUNG EINER DRUCKSTANGE
DISPOSITIF DESTINE A UN LANDAU ET UTILISATION D'UNE BARRE DE POUSSEE

(30) Priority: 14.09.2006 NL 1032494
(43) Date of publication of application: 10.06.2009
(73) Proprietor: Mutsy B.V., 5051 HT Goirle (NL)
(72) Inventor: DRIESSEN, Franciscus Johannus Cornelis, 5653 AT Goirle (NL)
(74) Representative: Van Someren, Petronella F. H. M.
(86) International application number: PCT/NL2007/000227
(87) International publication number: WO 2008/033014

(56) References cited:
- CN-A- 1 751 936
- DE-U1- 20 016 909
- FR-A- 1 421 918
- GB-A- 2 085 817
- US-A1- 2007 045 975

## Description

The invention relates to a carriage, in particular a pram, and to the use of a push bar.

A pram with swivel wheels is generally known. By means of these wheels the pram can be steered through bends without lifting the pram off the ground. Use is made here of a push bar. Most prams further provide the option of interchanging various support means for the child, for instance a carrycot or child seat. The carrycot and the child seat are here separate components which can be placed on an undercarriage. Most prams are also collapsible. The space taken up by the pram can hereby be reduced so that it can be transported in for instance the boot of a car.

The above pram does however have a number of drawbacks. A first drawback lies in the fact that the swivel wheels are placed either at the front or at the rear of the pram, and that the push bar has a fixed orientation relative to these wheels. Both configurations have advantages and disadvantages. If the swivel wheels are placed at the front the pram is easier to steer in bends. A drawback is however that the user of the pram must make continuous adjustments during movement in a straight line. With the swivel wheels at the front of the pram it is further more difficult to negotiate obstacles, such as for instance holes, kerbs or rough terrain such as a path in a wood. In addition to this, the swivel wheels are usually smaller than the non-swivelling wheels. The pram can begin to shake when negotiating the obstacles. This is much less the case when the front wheels of the pram are non-swivelling. Placing of the swivel wheels at the rear of the pram has the drawback that the steering of the pram is far less intuitive than when they are placed at the front. In order to negotiate a bend to the left the push bar must be moved to the right, and vice versa.

Another drawback relates to the fixed orientation of the support means for the child relative to the user of the pram. The child hereby either faces the user or faces away from this user. In the first case the user can better guarantee the safety of the child, since visual contact during operation of the pram is simple. In the other set-up the child has the opportunity to view the surrounding area. This set-up is therefore desirable for somewhat older children. It is however not possible to adapt the functionality of the above stated pram to the needs of the child or the wishes of the user.

A further drawback is related to the interchangeability of the support means. Each support means, such as for instance a child seat, car seat or carrycot, is a separate component. Despite the fact that the pram is collapsible, the entity of pram and support means takes up a great deal of space. This can result in problems if this must all be transported.

The closest prior art is represented by document GB 2085817 which discloses a pram with the following features:
- a collapsable undercarriage with moving means
- a sub-frame which is releasable from the undercarriage and which is provided with means for supporting a child and which is reversible relative to the undercarriage.

A drawback lies in the fact that the push bar is mounted on the undercarriage of the pram. If it is for instance desired to transport the child in the support means, such as for instance a carrycot, without the pram, it is necessary for the support means to be provided with a carrying bracket. This is for instance the case when walking up stairs. The space taken up by the pram and the support means hereby increases further.

The present invention has for its object to provide a multi-functional pram, wherein the movement behaviour thereof and the position of the child relative to the operator can be modified such that the above stated problems do not occur, or at least do so to a lesser extent.

This object is achieved according to the invention by means of a pram comprising a collapsible undercarriage provided with moving means. When not in use, the collapsible undercarriage can be stowed away. In the folded-open position the undercarriage can be moved over a ground surface by means of the moving means.

The collapsible undercarriage is further connected releasably to a sub-frame which is provided with means for supporting a child. The sub-frame can be detached from the undercarriage and is reversible relative to the undercarriage. It is hereby possible to change the orientation of the sub-frame relative to the undercarriage, for instance by uncoupling the sub-frame from the undercarriage, rotating it through 180 degrees in the horizontal plane and re-placing it on the undercarriage.

According to the invention the sub-frame is provided with a tiltable push bar. In the coupled situation of undercarriage to sub-frame the push bar can be coupled to one side so that it can be used as push bar for the pram. In the uncoupled position the push bar can be tilted to a position wherein the push bar can be used as a lifting bar for the sub-frame. A device is hereby provided in which the push bar has a dual function as a result of the tiltability.

Because the push bar is connected to the sub-frame, the sub-frame can be used per se as frame for supporting the child. In particular a carrying frame for the child is hereby obtained. The sub-frame can then for instance be picked up by the parent and moved to a less accessible location, such as to a higher floor and the like. The two separate components are light and can be lifted easily. The separate components are moreover more compact than when they are connected to each other, whereby the parts can be stowed away more easily.

In a preferred embodiment the push bar can be switched. The push bar can hereby be displaced from a first side of the pram for pushing in a first direction and be tilted to a second side of the pram for pushing in the second direction, wherein the first and second direction are preferably opposite directions. A multi-functional pram is hereby obtained. Multiple functions are once again performed using one bar, which is equipped both as a push bar for the pram and as carrying bar of the sub-frame.

In combination with the switchable push bar a pram, is obtained with four positions, i.e. swivel wheels at the front and child facing forward; swivel wheels at the front, child facing to the rear; swivel wheels at the rear, child facing forward; swivel wheels at the rear, child facing to the rear.

The undercarriage is provided with moving means, for instance wheels, in particular zero, one, two or more swivel wheels and zero, one, two or more fixed wheels bearing-mounted on the frame. In a preferred embodiment the undercarriage has four wheels, of which two are bearing-mounted fixed wheels and two are swivel wheels. The two swivel wheels are situated on a first side of the undercarriage. This embodiment is applied particularly in combination with means for supporting the child in a sitting position, for instance on a seat. The means for supporting the child are here preferably also switchable, in particular interchangeable.

In a further preferred embodiment the sub-frame comprises a frame on which supporting means for the child can be mounted. It is advantageous if this frame can be reused for different child-supporting functions. It is further comfortable for both child and the user if the frame, when coupled to the undercarriage, can be tilted relative to the undercarriage. The position of the sub-frame can thus be adjusted, for instance into a more horizontal position, when the child wants to sleep or is already asleep.

Preferred exemplary embodiments of child-supporting functions are serving as child seat, carrycot or car seat. It is advantageous if the same frame can be used in at least two of these functions. In the example of a child seat an arrangement of fabrics can for instance be connected to the frame, for instance by means of a zip fastener or press-studs, in order to thus form a child seat in combination with the frame. A similar approach can be taken in the example of a carrycot. For the stability of the cot it is however recommended to place a separate receptacle, for instance of plastic, in the frame in order to obtain more strength.

According to a further preferred embodiment the push bar is provided with a stepped adjustment for the purpose of tilting. The push bar can hereby be positioned in fixed positions, for instance every ten degrees or every fifteen degrees. The push bar can hereby be adjusted to the height of the user in particular the height of the pushing parent.

In a further preferred embodiment the pram has at least two operating means for tilting the push bar. It hereby becomes difficult for the child to tilt the push bar. Operation of the two operating means is necessary for the purpose of tilting. The operating means are coupled to an unlocking device. The unlocking device is activated when the two operating means are operated, whereby tilting of the push bar is possible.

In a preferred embodiment the operating means is a slidable sleeve. The slidable sleeve is preferably slidable along or over the push bar. The sleeve can be arranged around the push bar. The user can preferably pull the sleeve toward him/her along a bar of the push bar, whereby the operating means activate the unlocking device.

It is particularly advantageous when the push bar is embodied as a U-shaped bar and the ends of the legs of the rod bar connected to the sub-frame. The legs of the U-shape are preferably connected here to the coupling means, or at least a part of the coupling means, for coupling the sub-frame to the undercarriage.

The legs are preferably extensible. A push bar is hereby obtained with a length which is adjustable. The distance from the base of the push bar to the pram and/or the sub-frame hereby becomes adjustable. This is particularly advantageous when carrying the sub-frame on the push bar. By shortening the push bar the child will be lifted higher off the ground, thereby reducing collisions of the sub-frame with the ground while it is being carried.

In a preferred embodiment the legs have a telescopic form. The legs can hereby be extended. The telescopic embodiment can be manufactured so as to be invisible from the outside. The tube parts lying one inside the other are mutually engaging due to the telescopic form, and the locking of the extensible legs in a determined position can be easily designed.

The push bar is preferably provided with an operating element for unlocking the extensible legs. In a standard situation the extensible legs are always locked in the position they are in, preferably by a bias, preferably by a spring means, whereby the length is fixed. By operating the operating element, which is preferably placed on the pushing element, an unlocking device will be activated, whereby the legs can be extended. By arranging the operating element on the push bar, in particular on the base of the U-shaped push bar and in particular in the centre of the base, the user has easy access to the operating element and can operate this latter at an appropriate moment in order to extend or shorten the legs.

In a preferred embodiment and according to another aspect of the invention, the pram comprises locking means for locking the connection between undercarriage and sub-frame when the push bar has been tilted. A mechanism can be incorporated which, depending on the tilting of the push bar, makes unlocking of the coupling between the sub-frame and the undercarriage possible. A device is hereby obtained wherein unlocking is possible only in a fixed position, preferably the upright position of the push bar, and uncoupling of the sub-frame from the undercarriage is only possible in this position. This ensures that the user can release the sub-frame from the undercarriage in each case in a fixed position of the push bar, preferably the vertically upright position, whereby a sub-frame:is obtained with a weight distribution which is preferably symmetrical, and with a centre of gravity which preferably lies in the line of the vertically positioned push bar.

By linking the uncoupling of sub-frame and undercarriage to a position of the push bar, which is tiltable in the preferred embodiment of the invention, it is made clear to the user that the push bar is intended to function as push bar in the coupled position and as carrying bar in the uncoupled position. In another embodiment the unlocking means of the coupled situation sub-frame/undercarriage are connected to another element, preferably a movable and preferably tiltable element, in an embodiment with the tiltability of the undercarriage for supporting the child.

According to the other aspect, the invention relates to a pram for supporting and displacing a child, comprising an undercarriage with moving means and a sub-frame, which can be coupled thereto, for supporting the child, wherein the undercarriage can be folded down, wherein the coupling means between undercarriage and sub-frame are adapted to block folding-down when the undercarriage is coupled to the sub-frame. The undercarriage is likewise provided with means for locking the undercarriage in a folded-out, active position, wherein the sub-frame can be coupled to the undercarriage. According to this aspect a two-stage blocking of the device is in fact obtained. The undercarriage cannot be folded down due to its own locking in the folded-out position, nor can it be folded down because an additional locking/blocking is formed in the coupled situation. This second lock is activated by placing the upper frame/sub-frame on the undercarriage. This placing is the operation for activating the lock. The number of operations for activating the additional lock is hereby minimized.

In a preferred embodiment coupling means are arranged for coupling the sub-frame to the undercarriage. It is further recommended that the coupling means are releasable. The coupling means are preferably provided here with a vertical guide. When the sub-frame is uncoupled and coupled from/to the undercarriage, the vertical guide must be followed, whereby the uncoupling and coupling are only possible by means of a vertical movement of the sub-frame relative to the undercarriage. It is preferably the sub-frame which is lifted from or placed on the undercarriage, which is positioned on the ground via the moving means. A more balanced, symmetrical state of the sub-frame is hereby also ensured.

The sub-frame preferably comprises a part of the coupling means, and the undercarriage comprises a part of the coupling means. Two mutually engaging parts can hereby together form the coupling means. It is hereby possible that the mechanisms associated with the coupling means, for instance the locking for fold-down of the undercarriage in the coupled position, but also the locking of the coupled position, depending on a position of a determined component of the sub-frame, such as the push bar, are incorporated in the coupling means and thus concealed from view, in combination with an increased safety. Because the two parts together form a preferably closed housing in which the various mechanisms are accommodated, there is no danger of for instance a child's fingers getting into the mechanism, etc.

In a preferred embodiment the vertical guide is arranged on the undercarriage and the sub-frame comprises a shaft which can be received in the vertical guide. In co-action with the shaft the vertical guide ensures that the sub-frame can be moved only in vertical direction relative to the undercarriage, i.e. when the shaft is moved through the guide. The sub-frame can hereby be moved from an initial position,wherein the sub-frame is aligned with the undercarriage, to a position wherein the coupling means for coupling the sub-frame to the undercarriage can be activated, and whereby the coupling can be locked.

In a preferred embodiment the shaft of the subframe is connected to the push bar mounted tiltably on the sub-frame. The tilting of the push bar will rotate the shaft. Particularly when the shaft has a rectangular section, tilting of the push bar will result in rotation of the rectangular section of the shaft, use of which can be made for instance for the locking function. When the guide is a vertical track and the shaft has a rectangular section which has a form-fitting similarity thereto, the shaft cannot be rotated in the vertical guide because of the non-round section. In a preferred embodiment there is arranged at an end of the guide, which forms a channel, a round recess in which the shaft can be rotatably received. A shaft of rectangular section can also be received rotatably in a round recess at the end of the guide, and can rotate therein. When the shaft is rotated however, it cannot be moved back through the channel and the uncoupling of the sub-frame from the undercarriage cannot take place.

It is further recommended that the round recess is surrounded by at least one lip, preferably two lips, which lie clampingly on the shaft in a tilted position of the push bar. A further locking and coupling of the sub-frame to the undercarriage is hereby ensured. In coaction with the pusher, which can be switched and also used as lock mechanism, the large arm (distance between the top of the arm and the rotation point of the arm) can be used to remove play from the coupling means. The coupling means on either side of the sub-frame can be seen as adapter. Because lips, which can be pressed outward, are received movably in the part of the adapter or the coupling means arranged on the undercarriage, the play in the sub-frame arranged thereon is reduced.

It is further advantageous when the undercarriage has a folded-out position in the coupled situation, and that operation of the collapsing means of the undercarriage is blocked in the coupled situation of the undercarriage to the sub-frame. The undercarriage can hereby not be collapsed while the sub-frame is mounted, and in particular when the child is being supported. An additional assurance is hereby obtained against injury to the child if the undercarriage were to be folded down unexpectedly while a child is in place on the sub-frame. Owing to the blocking, this is not possible.

In a preferred embodiment the collapsing means comprise a trigger, the movement of which is blocked in the coupled situation of the undercarriage to the sub-frame. A projection can for instance block the trigger when the sub-frame is placed.

In a preferred embodiment the trigger is guided slidingly in a guide track of a coupling means mounted on the collapsible undercarriage. By arranging the sub-frame in the coupling means for coupling the sub-frame to the undercarriage, a projection of the sub-frame can for instance block the sliding guiding of the trigger in the guide track.

It is further advantageous if the sub-frame comprises a locking means for staged locking of the tilted frame. The frame can hereby be tilted at all times in adjustable angles and for instance fixed in a horizontal position, in an sloping position or in a vertical position. The staged locking can for instance take place every ten or fifteen degrees.

In addition to the use as a child seat or carrycot, it is advantageous if the pram comprises mounting means for mounting a car seat. There is further provision enabling coupling of other child-supporting means, such as for instance a maxi-cosy, to the frame by making use of mounting means such as adapters.

The invention also relates to the use of a bar on a pram. The use of a bar is characterized in that the bar forms part of a sub-frame which can be coupled to an undercarriage for a pram, wherein the sub-frame is provided with means for supporting the child,
wherein this bar is used as push bar of the pram in the coupled situation of undercarriage to sub-frame, and wherein the bar is used in the uncoupled situation as carrying bar for the sub-frame. The bar of the pram thus has a dual function in use. A pram is hereby obtained, the manufacturing cost of which is lower than in the prior art, while the device has a plurality of functions.

The use of the bar can further have one of the properties as indicated in the foregoing description relating to the push bar.

The invention will be further described hereinbelow on the basis of preferred embodiments and on the basis of specific examples with associated advantages. The invention is not however limited to the written text. The invention also relates to non-stated advantages. It is possible to file a divisional application for an undercarriage or a sub-frame with one of the stated or shown components, without a specific advantage having being described therein.

The invention will be further described on the basis of the preferred embodiments shown in the drawings, in which:
- Figure 1: is a perspective view of pram according to a first embodiment,
- Figure 2: shows an.uncoupled:situation of the pram according to the first embodiment,
- Figure 3: is a side view of the pram according to the first embodiment,
- Figure 4: is a side view of different positions of the pivotable push bar,
- Figure 5: shows a second embodiment of the pram according to the invention,
- Figure 6: shows an uncoupled situation of the second embodiment of the pram according to the invention,
- Figures 7a-7c: show cross-sections of the coupling means for coupling the sub-frame to the undercarriage,
- Figure 8: shows a view of a folded-down undercarriage according to an embodiment,
- Figure 9: shows a cut-away view of a detail according to IX in figure 1,
- Figure 10: shows a cut-away view of a detail according to X in figure 1.
- Figures 11a-11b: show a further embodiment of the frame,
- Figures 12a-12b: show a detail view of the coupling between the different frame parts of the frame of figure 11,
- Figure 13: shows a schematic assembly of the coupling of figure 12,
- Figure 14: shows a schematic cross-section of the frame of figure 11 at the position of the coupling.

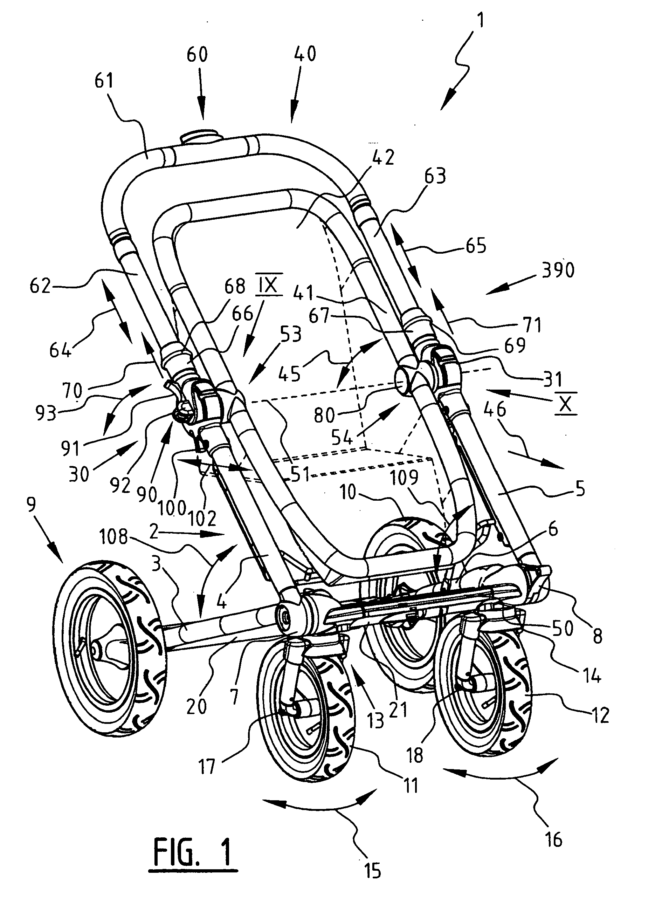

Figure 1 shows a pram 1. The pram has an undercarriage 2 and a sub-frame 390 arranged thereon. The undercarriage will be described first of all.

The undercarriage consists of a number of tubes 3-6 which are mutually connected by means of coupling elements 7,8 formed by injection moulding, and to which moving means 9-12 are coupled. Wheels 11 and 12 are coupled to the undercarriage in bearing-mounted manner via wheel sub-frame 13,14 and can thus swivel as according to arrows 15,16. Wheel sub-frame 13,14 comprises a U-shaped arm which ends in a shaft 17,18, this being the shaft of bearing-mounted wheels 11,12.

Close to an outer end of tubes 3 and 6 is arranged a wheel 9,10, and these are bearing-mounted and can rotate. A transverse connection 20 and a transverse connection 21 couple tubes 3,4 and 5,6.

Coupling means 30,31 is arranged on an outer end of tubes 4,5. Coupling means 30,31 couples undercarriage 2 to sub-frame 390, which is shown in the coupled situation in figure 1. Details of coupling mechanism 30,31 will be explained later.

Sub-frame 390 comprises a push bar 40 and a frame 41, wherein frame 41 can be provided with a seat 42 which is shown in broken lines and in which a child can sit.

In the shown embodiment the frame 41 is tilted from a horizontal position as according to arrow 45 to an inclining position in which a pram is formed. Bar 40 forms a push bar of the pram, which can be pushed as according to arrow 46. An operator of pram 1 can push against push bar 40 and move it forward as according to arrow 46. Wheels 11,12 can swivel as according to arrows 15,16 and can thus be used for steering. A direction can be given subject to the pushing force.

A locking is incorporated in coupling mechanism 30,31 for the purpose of locking frame 41 in the shown position.

The legs of the child protrude from seat 42 and support on support surface 50. A larger child can do without the support surface.

The connection between seat 42 and frame 41 can for instance be a seam, reinforced for instance with a plastic tube which is received in a channel (not shown) in frame 41, for instance by accommodating the plastic seam therein.

Frame 41 can pivot around shaft 51 as according to arrow 45. Push bar 40 can pivot as according to arrow 45, also around shaft 51. The axes of push bar 40 and of frame 41 are the same. The hinge of frame 41 is formed by elements 53 and 54, while the hinge of push bar 40 is also formed by coupling elements 30,31.

Push bar 40 is provided with a control button 60 which is arranged on base 61 of U-shaped push bar 40. This control button 60 is adapted to operate the extensibility of carrying bar/push bar 40. The legs of the push bar take a telescopic form. The telescopic element can be locked in a determined position, preferably in continuously variable manner, but optionally in fixed positions. The movability is enabled by operating the button 60.

Push bar 40 further comprises two legs 62,63 which can be extended as according to arrows 64,65 in that the tubes take a telescopic form.

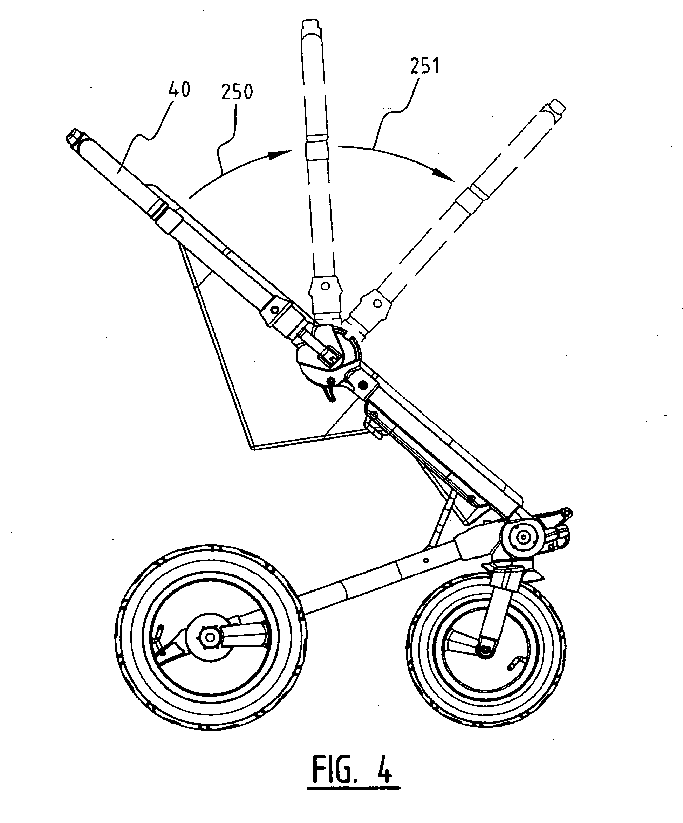

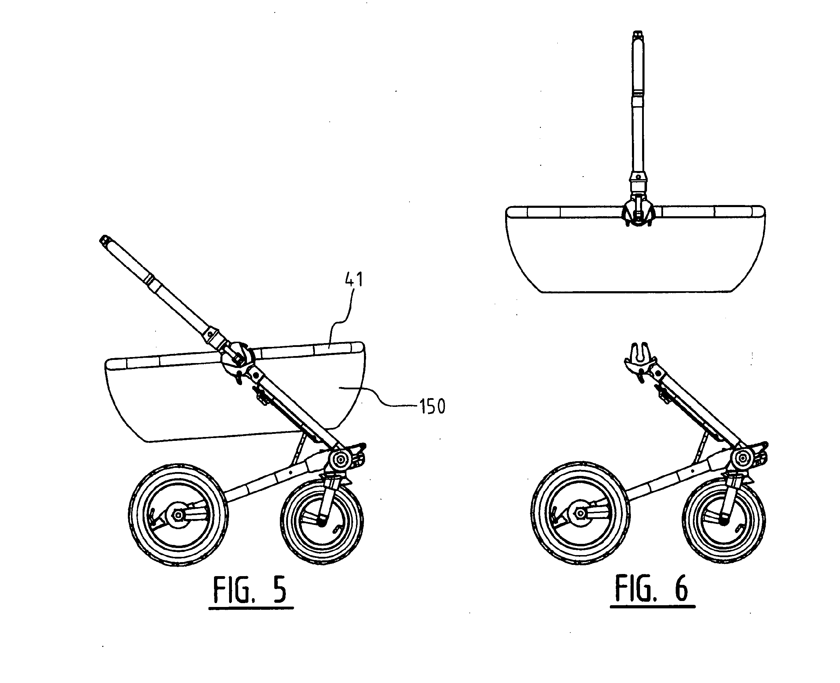

Push bar 40 is tiltable, as shown in figure 6. The tilting/switching can be activated by operation of elements 66,67 by gripping under flange 68,69 and sliding over respective tubes 62,63 as according to arrows 70,71. Operation takes place with two hands. When sleeve 66,67 is displaced as according to arrows 70,71, push bar 40 can be pivoted as according to arrow 45, as shown in figure 4.

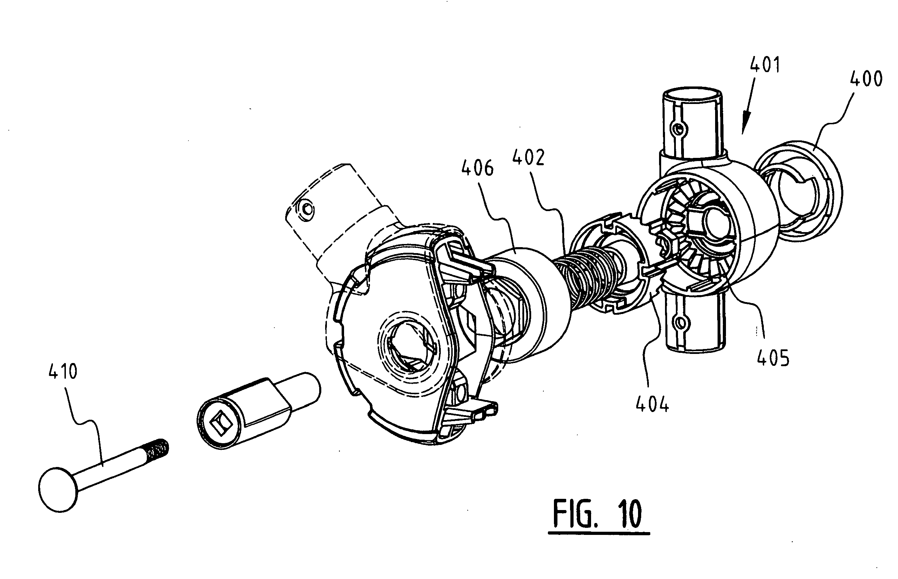

Frame 41, which is an example of a means which can support a child, can be pivoted/tilted as according to arrow 41, for instance after operation of control button 80, which can be pressed in, after which a locking is released and the pivoting around shaft 51 as according to arrow 45 becomes possible. The control button is further shown in figure 10.

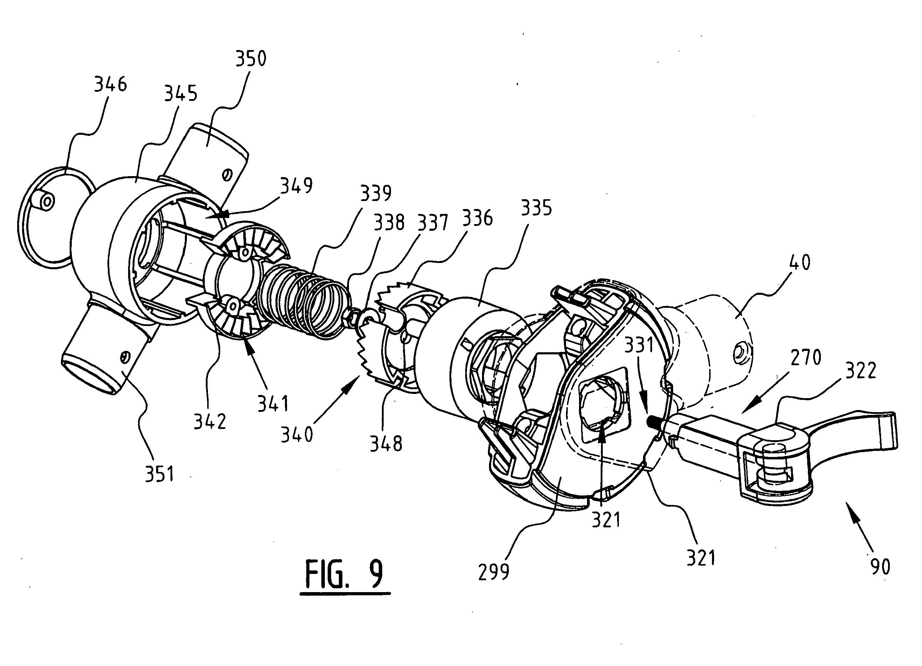

In the shown embodiment the frame 41 is further locked by means of a blocking device 90 provided with a hook 91, which can rotate around a shaft 92 as according to arrow 93. Frame 41 can be blocked by operating this locking element 90. This will be further explained with reference to figure 9.

A trigger 100 is situated on an underside of coupling means 30. Coupling means 31 is provided with a like trigger 101. Trigger 100 is received in a guide track of the coupling means and can slide therein as according to arrow 102. A user can operate the trigger with the finger, trigger 100 being embodied as a hook for this purpose. The trigger is biased, for instance with a spring or with a rubber seal, in the locked position.

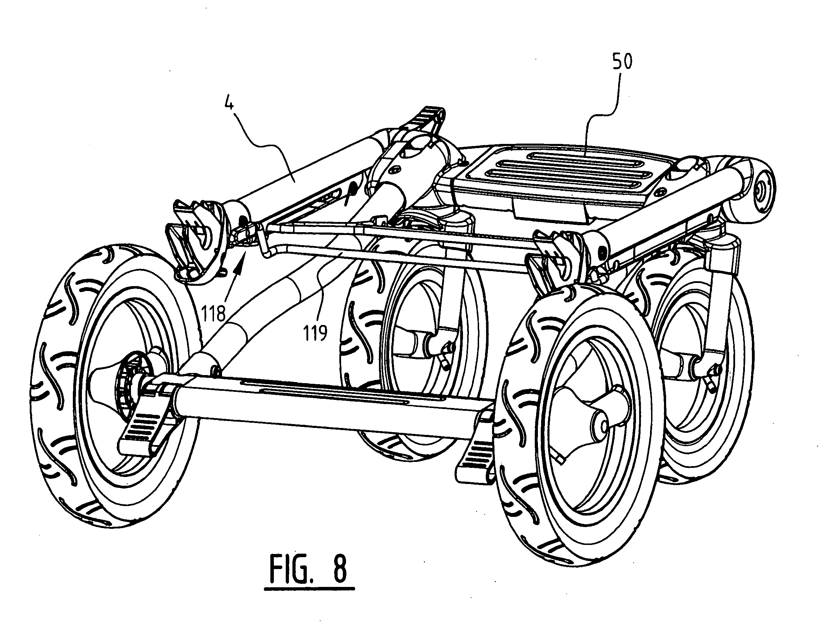

When the trigger is operated an unlocking mechanism on undercarriage 2 is activated, whereby undercarriage 2 can be moved from the shown folded-out/active situation to a folded-down, more compact situation, wherein tubes 4,5 are moved closer to tubes 3,6. The folded-down situation is shown in figure 8. Tubes 4,5'can pivot as according to arrows 108,109, wherein hinges 7,8 serve as joints. The axis of the pivoting movement is formed along foot support 50.

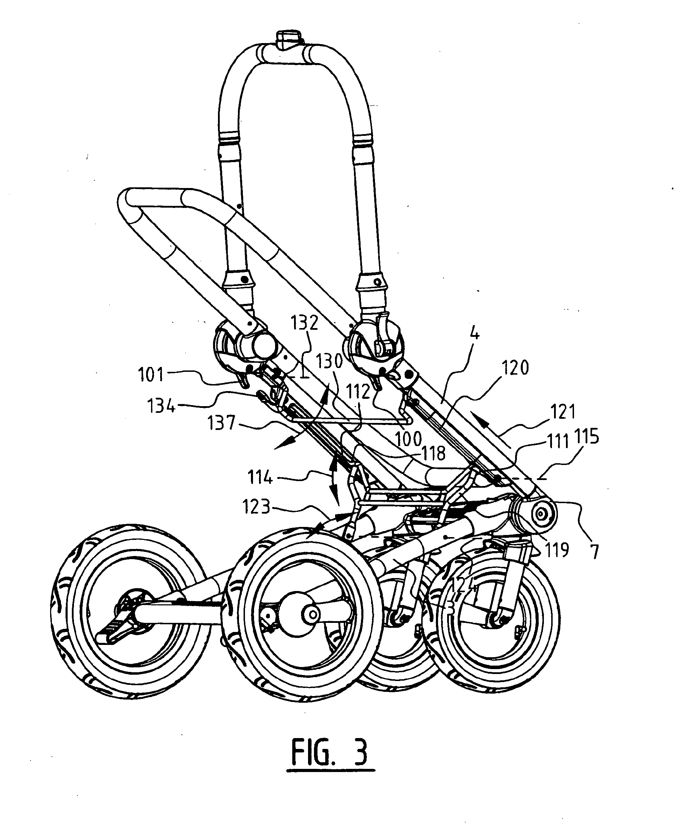

The unlocking mechanism of the undercarriage can be seen more clearly in figure 3. Triggers 100,101 are connected via a cable received in tube 4,5 to pivoting hooks 111,112, which can pivot as according to arrows 113,114, wherein the axis 115 for hook 111 is shown with broken lines.

When the hook is pivoted out of the tube, the outer end 118 of a rod 119 is herein released and, guided in track 120, can be moved along tube 3 as according to arrow 121 to the end remote from hinge 7. Rods 119 can pivot around shaft 124 as according to arrow 123. The outer end of tube 4 provided with coupling means 30 will herein move toward tube 3.

At the end of track 120 the outer end 118 is caught hookingly by hooks (not shown) of a connecting rod 130, here a pressure rod. When reaching the end of the track, the outer ends will partially remove the hooks from the track. The pressure rod is biased in the blocking position, i.e. with the hooks in the track. Once the outer ends have moved past the hooks, the hooks will block the outer ends and connecting rod 130 serves as locking means for the folded-down position of undercarriage 2. Connecting rod 130 can pivot around shaft 132 as according to arrow 131. In another embodiment the connecting rod is fixedly connected to the undercarriage and only serves for purposes of rigidity.

An operating element in the form of a pressing element 134 is connected to connecting rod 130. When the user operates pressing element 134, the construction is unlocked and outer end 118 of rods 119 can be released and once again move freely through track 120.

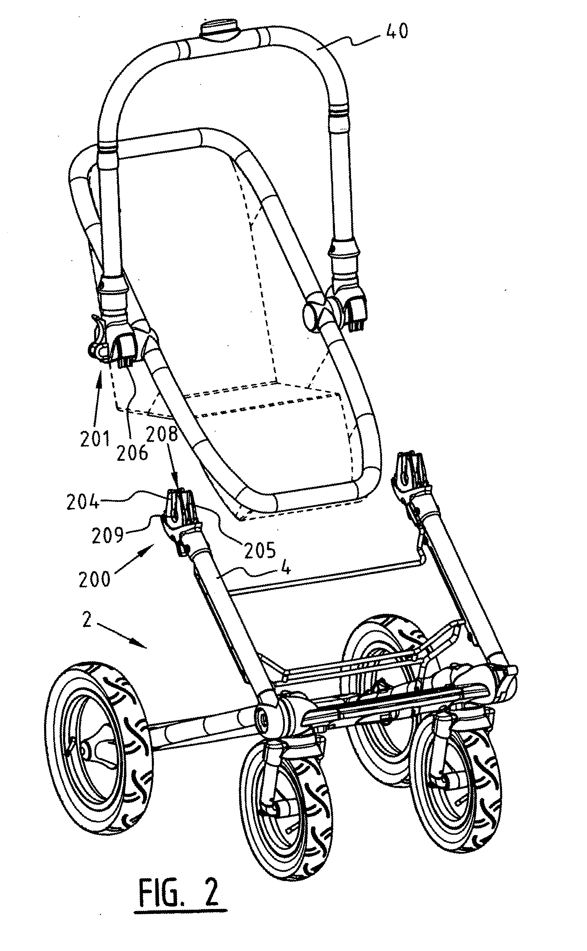

Figure 2 shows the uncoupled situation of the device according to a first embodiment of the invention. Undercarriage 2 is now detached from sub-frame 390. Push bar 40 of the pram is pivoted to the vertical position, operated by means of sleeves 66,67. In this embodiment uncoupling of sub-frame 390 from the undercarriage is only possible in a predetermined position of push bar 40, here the vertical position.

Sub-frame 390 has now become a carrier for a baby or child, without undercarriage and without moving means. Frame 41 is still placed obliquely but is preferably rotated horizontally. Frame 41 can support a cot 150. This is shown in figures 5 and 6. The child can be accommodated in the cot.

In another embodiment however, the cot is placed on the frame. In this embodiment the frame can be placed on a surface, while the cot is placed on top of it.

In the uncoupled situation push bar 40 has become a carrying bar 40. A user can lift the carrying bar and therein lifts the sub-frame out of the respective coupling means 30,31.

The uncoupled sub-frame can be placed on another undercarriage, for instance a non-mobile undercarriage such as a car seat. Use can be made here of the same coupling means 30,31, although other coupling means can also be used for coupling to another undercarriage. The car seat can also be placed on the sub-frame, in particular on the frame. A dual seat for children can also be supported with the frame. In yet another embodiment a holder, for instance for shopping, can be placed on the frame.

In the embodiment shown in figure 2 the coupling means 30 consists of two elements. Coupling means 30 has a first part 200 which forms part of undercarriage 2 and which is arranged on the end of bar 4. Second part 201 of coupling means 30 forms part of sub-frame 390. In assembled form the coupling means 30 is cylindrical.

First part 200 comprises vertically upright guides 204,205. These can co-act with guides 206 of second part 201 which point vertically downward. They can be placed one on top of the other. From the coupled position the guides can move along each other, wherein a vertically directed movement is possible.

A channel is present between guides 204,205. Channel 208 also points upward. A round opening 209 is formed at the end of the channel. A shaft can be received in channel 208, and ultimately in opening 209, this shaft forming part of second part 201 of coupling means 30. The shaft cannot be seen in figure 2.

Figure 4 shows four positions of push bar 40, which is also carrying bar 40 of sub-frame 390. The pivot axis is formed by axis 51.

In the coupled situation of the device as shown in figure 4, push bar 40 can be switched as according to arrows 250, 251. It is hereby possible to change the pushing direction of the device. The child can hereby face away from the user or, conversely; face toward the user.

Wheels 11,12 can swivel, whereby steering with the pram is possible. In one embodiment a locking element is present, preferably under footrest 50, for locking the wheels in a position parallel to wheels 9,10. This is particularly useful when the push bar is switched and the pram must move onto a pavement or other obstacle. Further details relating to the locking element will be known to the skilled person.

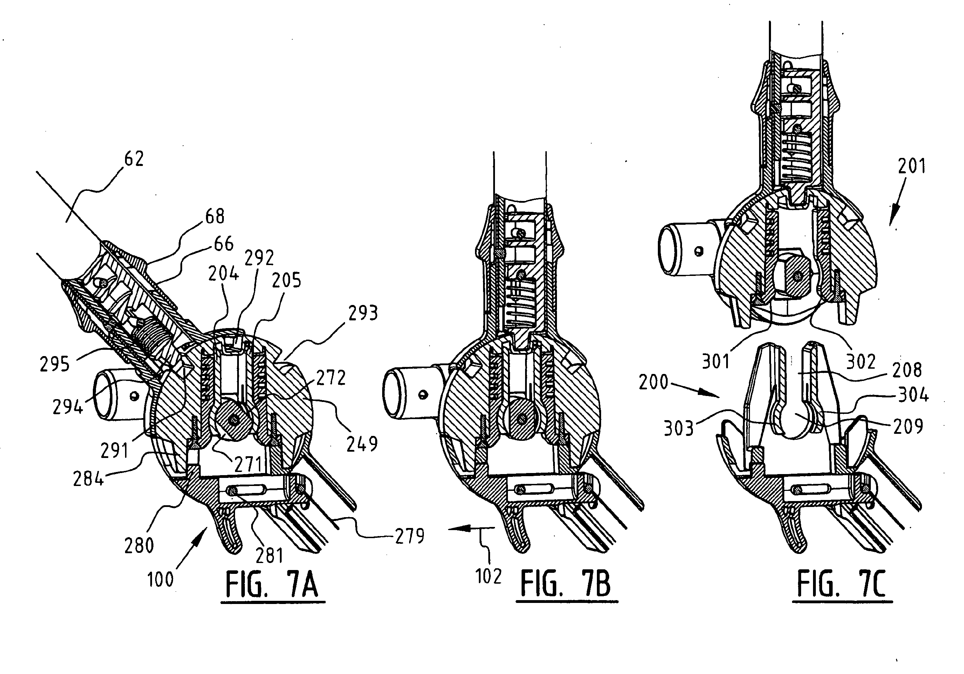

Figures 7a-c show three positions of coupling means 30. Cross-sections are shown, and figure 7a shows coupling means 30 with push bar 40 in a tilted position. The sub-frame is further coupled to the undercarriage.

Coupling means 30 consists of two elements 200, 201. Element 201 comprises a shaft 270. Shaft 270 has a section with at least two parallel sides 271,272 which are parallel to the legs of U-shaped push bar 40. This shaft can hereby only be received in channel 208 between guides 204,205 when these sides 271,272 are vertical. Owing to the direct coupling to push bar 40, this will only be the case when the push bar occupies the vertical position. A mechanism is hereby obtained wherein the uncoupling or coupling of the sub-frame from/to the undercarriage is only possible when the push bar has been moved from the tilted position to a vertical position, wherein it can serve as carrying bar.

Trigger 100 is shown. The body of trigger 100 comprises a tooth 280 which protrudes upward in the shown embodiment. The trigger is received in coupling means 30 for movement as according to arrow 102. The coupling means comprises a guide pin 281. Trigger 100 can be connected to a wire 279 which is connected to an unlocking/locking means for folding down undercarriage 2.

In figures 7a and 7b the trigger cannot move as according to arrow 102. The movement is blocked by the end 284, which protrudes downward from second element 201 of the coupling means. After the removal of the end 284, as shown in figure 7c, tooth 280 can move unhindered in sideways direction. A mechanism is hereby obtained wherein the undercarriage cannot be folded down when the sub-frame is coupled to the undercarriage.

In the section according to figures 7a-7c three grooves 290,291,292 are arranged on the second component 201 of coupling means 30. A tip 294, which is connected to sleeve 66, can protrude into the grooves/recesses. In the protruding position, biased here by a suitable spring means 295 or other biasing means, the tip and groove form a blocking means or staged adjustment for the position of tiltable push bar 40. When the used moves the sleeve counter to the bias, the tip 294 can be pulled out of the respective groove and the push bar can be switched/tilted.

Push bar 40 can be tilted relative to body 299, which forms part of element 201. Body 299, on which guides 206 are arranged, will not move during any rotation of push bar 40 or frame 41, and retains its original position relative to first part.200 of coupling means 30.

Body 299 forms a joint around which push bar 40 is partially movable. Body 299 also forms the suspension point for the hinge of frame 41.

Guide arms 301,302 are arranged around shaft 270. During coupling of the sub-frame to the undercarriage these arms 301,302 press on corresponding lips 303,304 of first part 200 of the coupling means. When the shaft is rotated, lips 303,304 can be pushed onto shaft 270, whereby a natural resistance is acquired during rotation.

Figure 7b shows the locked situation of push bar.40 in a vertical position.

Figure 8 shows a folded-down undercarriage 2. Because the undercarriage and sub-frame are releasable from each other, two separate components can be obtained which are both easier to handle and can for instance be stowed away more easily.

Figure 8 shows that rods 119 are located in a position other than in figure 3. Outer end 118 has slid along tube 4 due to the folding-down.

Figure 9 shows a perspective, exploded view of second part 201 of coupling means 30 and of the parts connected thereto for pivoting frame 41.

Body 299 is received in housing 320 which is shown with broken lines as joint of tiltable push bar 40 and which is connected to the end of: the leg of push bar 40 It is the extension of the tilting mechanism, including sleeve 66 of the push bar.

An opening 321, in which housing 322 of handle 91/blocking device 90 is received, is arranged in housing 320. The opening is partly rectangular, similarly to housing 322. A non-rotatable connection is hereby made between the tiltable push bar and blocking device 90.

A part of housing 320 forms shaft 270 of second part 201 of the coupling means. Shaft 270 is arranged through opening 321. Running through shaft 270 is a pin 330 which is coupled to handle 91. When handle 91 is pivoted, pin 330 will protrude to a greater or lesser extent from shaft 270/housing 322. Outer end 331 of pin 330 is connected to the preferably plastic part 336 which is provided with a toothing 340 on the side remote from handle 90. The toothing can co-act with toothing 341 of component 342, likewise an injection-moulded component.

Outer end 331 is provided with nut 338 and ring 337, while outer end 331 protrudes through opening 348 of component 336.

Part 336 is received in sleeve 335, through which pin 330 protrudes. Part 336 is guided in the sleeve and can move therein. The inner side of the sleeve forms a guide for movable part 336. Sleeve 335 is preferably connected non-rotatably to housing 299. Spring means, such as a spiral spring 339, are preferably arranged between part 336 and part 342. Sleeve 335 also forms a. spacer means between movable frame 41, which can be connected to tubes 350,351 of injection-moulded part. 345, and body 299. Push bar 40 and tubes 4,5 of the undercarriage also lie in the plane of bod 299. Sleeve. 335 determines the distance between the pivoting frame and these tubes. Sleeve 335 ensures a sufficiently large distance so that for instance a child's fingers cannot become jammed between the pivoting parts.

Part 342 is fixedly connected to part 345 and screwed to cover 346, so that it is enclosed between sleeve 335 and space 349 of part 345.

When outer end 331 protrudes maximally, i.e. protrudes maximally to the right in the shown figure, toothing 340 will be pressed onto toothing 342. When handle 91 is moved to the other position, the outer end is retracted slightly and the toothing is released. The frame, connected via part 345, could hereby be rotated on the toothing.

Figure 10 shows a similar view of coupling means 31. A push button 400 is here received in injection-moulded part 401. The push button can be pushed counter to the spring tension of spring 402 and will herein remove toothing 404 from toothing 405, whereby rotation. of these parts relative to each other becomes possible. Sleeve 406 is present as spacing means. Toothing part 405 is now fixedly connected via a bolt 410, which is received non-rotatably in shaft part 411, which has a structure similar to the shaft part of coupling means 30 according to figure 9. The spring biases the toothed parts toward each other. The spring force can be overcome by operation and the parts can be released from their mutual engagement.

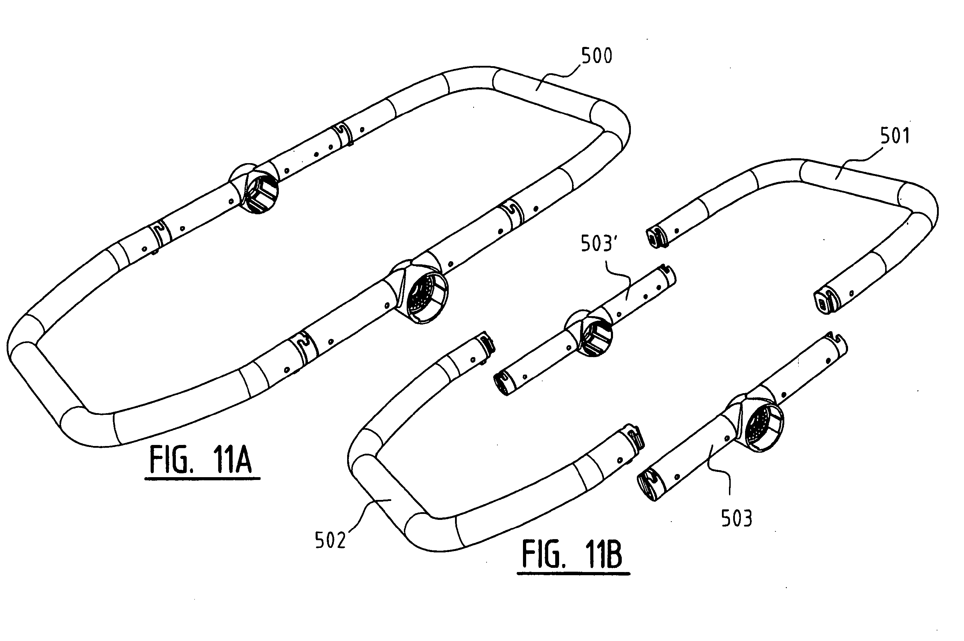

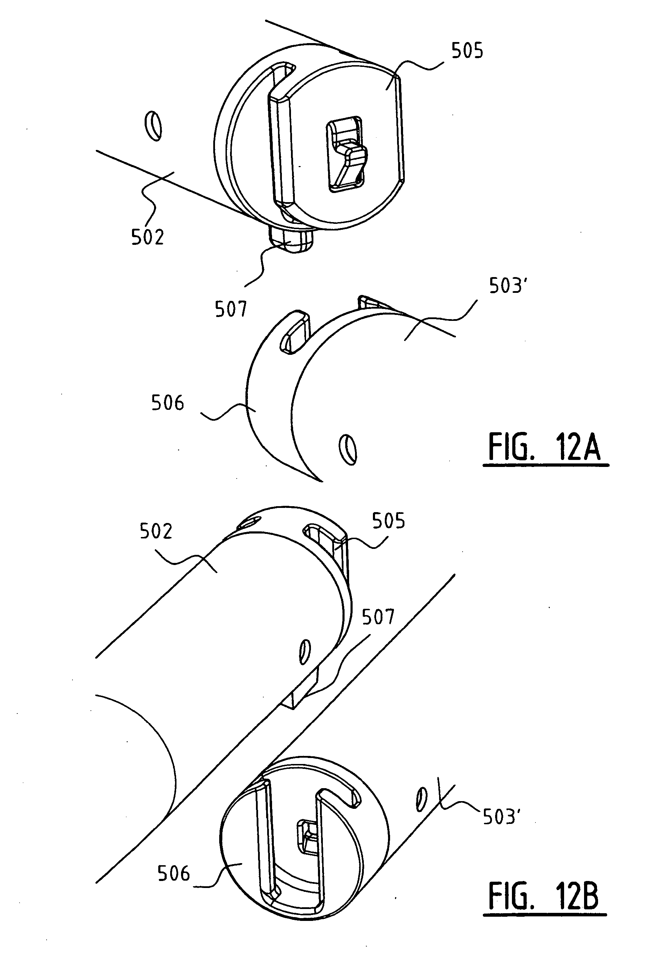

Figures 11a and 11b show a further embodiment of frame 500. This frame 500 can be uncoupled into four separate parts 501, 502, 503 and 503'. The space taken up by the sub-frame can be reduced by uncoupling the parts. Two co-acting coupling pieces, for instance 505 and 506 in figure 12, are arranged between two parts which are adjacent in coupled position, for instance 502 and 503' as shown in figures 12a and 12b. These coupling pieces serve on the one hand for the coupling between the different parts of frame 500, but can on the other serve to connect other accessories to frame 500 An example hereof is a baggage unit comprising two U-shaped tubes between which a fabric part, for instance textile, is placed. The tubes are provided on the outer ends with coupling pieces which can co-act with the corresponding coupling pieces in parts 503 and 503'. Baggage, for instance shopping, can be transported in such a tensioned construction. A second child supporting means can also be obtained by mutually connecting the above stated two U-shaped tubes at the free ends and tensioning a piece of fabric in the thus formed construction. This creates a second child supporting means.

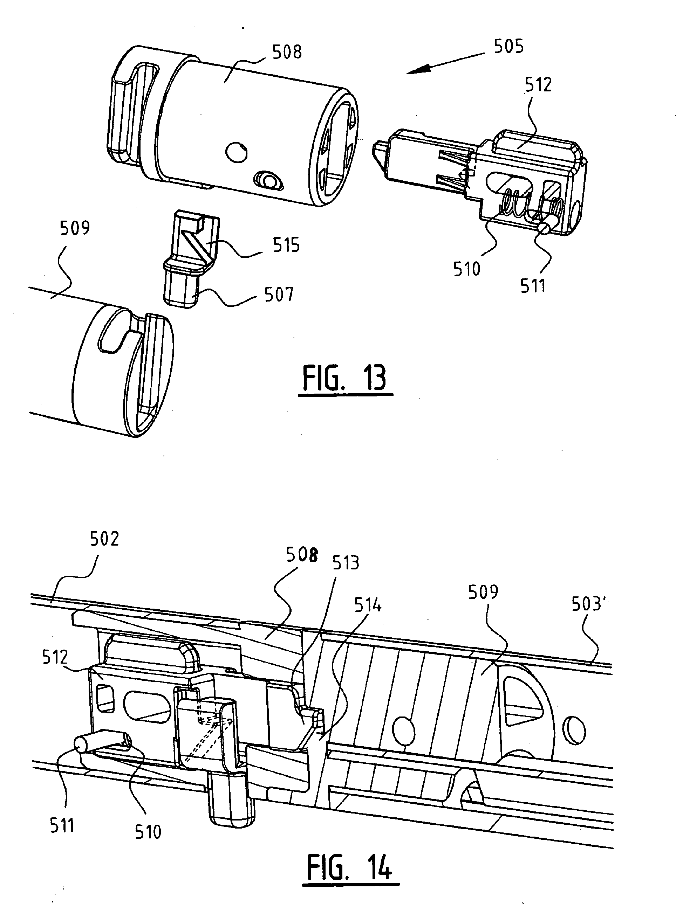

Figure 13 shows a schematic assembly of the couplings of figures 12a and 12b. Coupling 505 comprises a housing 508, a push button 507, a spring 510, a shaft 511 and a clamping element 512. The mutual connection of these elements is shown in figure 14. Housing 508 is received in part 502. Clamping element 512 is placed under tension by a spring 510, which is clamped in housing 508 by shaft 511, so that clamping element 512 protrudes from the end of housing 508, see figure 12a. The protruding part 513 co-acts with a recess 514 in housing 509, which is received in part 503'. When parts 502 and 503' are coupled, the protruding part 513 is pressed in until the coupling pieces are displaced over each other to an extent such that protruding part 513 can enter recess 514 and thus lock the coupling. By pressing in push button 507 the inclining edge 515 of push button 507 is pushed against clamping element 512 whereby it moves out of the recess. Farts 502 and 503 can hereby be separated from each other.

Although the invention has been shown on the basis of a number of preferred embodiments, it will be apparent to the skilled person that various other embodiments are possible. Although the invention has been described with reference to characterizing :measures, some of which have been stated with the advantages and others without the advantages, it will be apparent to the skilled person that it is within the bounds of possibility to file divisional applications for specific embodiments, the advantages of which have. been stated, or even not stated.

## Claims

1. Pram, comprising a collapsible undercarriage (2) provided with moving means (9-12) and at least a sub-frame (390) which is releasable from the undercarriage and which is provided with means for supporting a child, wherein the sub-frame (390) is provided with a tiltable push bar (40) and is reversible relative to the undercarriage (2).

2. Pram as claimed in claim 1, wherein the push bar can be switched.

3. Pram as claimed in claim 2, wherein the sub-frame comprises a frame (41) on which supporting means for the child can be mounted.

4. Pram as claimed in claim 3, wherein the frame (41) can be reused for different child supporting functions.

5. Pram as claimed in claim 3 or claim 4, wherein the frame (41), in the position coupled to the undercarriage (2), is tiltable relative to this undercarriage, or in a position of use as child's seat, is a frame of a child's seat, or in a position of use as carrycot, is a frame of a carrycot.

6. Pram as claimed in any of the foregoing claims, wherein the push bar (40) is provided with a stepped adjustment for the purpose of tilting.

7. Pram as claimed in any of the foregoing claims, having two operating means for tilting the push bar, wherein the operating means preferably comprises at least a slidable sleeve (66,67), which is preferably slidable over the push bar.

8. Pram as claimed in any of the foregoing claims, wherein the push bar (40) is substantially U-shaped and wherein the ends of the legs (62,63) are connected to the sub-frame (390) and wherein the legs (62,63) of the U-shape are extensible, wherein the legs (62,63) preferably have a telescopic form, and wherein the push bar (40) preferably comprises an operating element for unlocking the extensible legs.

9. Pram as claimed in any of the foregoing claims, comprising locking means for locking the connection between undercarriage and sub-frame when the push bar has been tilted.

10. Pram as claimed in any of the foregoing claims, comprising coupling means (30,31) for coupling the sub-frame to the undercarriage, wherein the coupling means are releasable and provided with a vertical guide (204,205), wherein preferably the undercarriage comprises a vertical guide (204,205) and the sub-frame comprises a shaft (270) which can be received in the vertical guide, said guide preferably comprising a channel which runs out into a substantially round recess in which the shaft is rotatably received, said round recess preferably being surrounded by a lip (303,304) which lies clampingly on the shaft in the tilted position of the push bar.

11. Pram as claimed in any of the foregoing claims, wherein operation of the collapsing means of the undercarriage is blocked in the coupled situation of the undercarriage and sub-frame, and wherein the collapsing means preferably comprise a trigger (100), the movement of which is blocked in the coupled situation, said trigger preferably being guided slidingly in a guide track of a coupling means mounted on the collapsible undercarriage.

12. Pram as claimed in any of the claims 3-11, wherein the sub-frame (390) comprises a locking means for stepped locking of the tilted frame (41).

13. Pram as claimed in any of the claims 3-12, further comprising mounting means for mounting a car seat on the frame (41).

14. Use of a push bar (40) as claimed in claim 2 for a pram for displacing a child

## Patentansprüche

1. Kinderwagen, der ein zusammenklappbares Fahrgestell (2) umfasst, das mit beweglichen Mitteln (9-12) und mindestens einem Hilfsrahmen (390) versehen ist, der von dem Fahrgestell lösbar ist und der mit Mitteln zum Tragen eines Kindes versehen ist, wobei der Hilfsrahmen (390) mit einer neigbaren Schubstange (40) versehen ist und bezüglich des Fahrgestells (2) umkehrbar ist.

2. Kinderwagen gemäß Anspruch 1, wobei die Schubstange umgestellt werden kann.

3. Kinderwagen gemäß Anspruch 2, wobei der Hilfsrahmen einen Rahmen (41) umfasst, auf dem ein Tragemittel für das Kind angebracht werden kann.

4. Kinderwagen gemäß Anspruch 3, wobei der Rahmen (41) für unterschiedliche Kindtragfunktionen wiederverwendet werden kann.

5. Kinderwagen gemäß Anspruch 3 oder 4, wobei der Rahmen (41), in der an das Fahrstell (2) gekoppelten Position, relativ zu diesem Fahrgestell neigbar ist oder in einer Position der Verwendung als Kindersitz ein Rahmen eines Kindersitzes ist oder in einer Position der Verwendung als Kindertragetasche ein Rahmen einer Kindertragetasche ist.

6. Kinderwagen gemäß einem der vorhergehenden Ansprüche, wobei die Schubstange (40) mit einer gestuften Einstellung zum Zwecke des Neigens versehen ist.

7. Kinderwagen gemäß einem der vorhergehenden Ansprüche, der zwei Bedienungselemente zum Neigen der Schubstange aufweist, wobei das Bedienungselement bevorzugt mindestens eine verschiebbare Hülse (66, 67) aufweist, die bevorzugt über die Schubstange verschiebbar ist.

8. Kinderwagen gemäß einem der vorhergehenden Ansprüche, wobei die Schubstange (40) im wesentlichen U-förmig ist und wobei die Enden der Schenkel (62, 63) mit dem Hilfsrahmen (390) verbunden sind und wobei die Schenkel (62, 63) bevorzugt eine teleskopische Form aufweisen und wobei die Schubstange (40) bevorzugt ein Bedienungselement zum Entriegeln der ausziehbaren Schenkel umfasst.

9. Kinderwagen gemäß einem der vorhergehenden Ansprüche, der Verriegelungsmittel zum Verriegeln der Verbindung zwischen dem Fahrgestell und dem Hilfsrahmen, wenn die Schubstange geneigt worden ist, aufweist.

10. Kinderwagen gemäß einem der vorhergehenden Ansprüche, der Kopplungsmittel (30, 31) zum Koppeln des Hilfsrahmens an das Fahrgestell aufweist, wobei die Kopplungsmittel lösbar sind und mit einer vertikalen Führung (204, 205) versehen sind, wobei bevorzugt das Fahrgestell eine vertikale Führung (204, 205) umfasst und der Hilfsrahmen einen Schaft (270) umfasst, der in der vertikalen Führung aufgenommen werden kann, wobei die Führung bevorzugt einen Kanal umfasst, der in eine im Wesentlichen runde Ausnehmung bevorzugt von einer Lippe (303, 304) umgeben ist, die in der geneigten Position der Schubstange klemmend auf dem Schaft liegt.

11. Kinderwagen gemäß einem der vorhergehenden Ansprüche, wobei die Benutzung des Zusammenklappmittels des Fahrgestells in der gekoppelten Situation des Fahrgestells und Hilfsrahmens blockiert ist und wobei das Zusammenklappmittel bevorzugt einen Auslöser (100) umfasst, dessen Bewegung in der gekoppelten Situation blockiert ist, wobei der Auslöser bevorzugt verschiebbar in der Führungsbahn eines Kopplungsmittels, das an dem zusammenklappbaren Fahrgestell angebracht ist, geführt ist.

12. Kinderwagen gemäß einem der Ansprüche 3-11, wobei der Hilfsrahmen (390) ein Verriegelungsmittel zum gestuften Verriegeln des geneigten Rahmens (41) umfasst.

13. Kinderwagen gemäß einem der Ansprüche 3-12, der weiter Befestigungsmittel zum Befestigen eines Fahrzeugsitzes auf dem Rahmen (41) umfasst.

14. Verwendung einer Schubstange (40) gemäß Anspruch 12 für einen Kinderwagen zum Verschieben eines Kindes.

## Revendications

1. Poussette-landau comprenant un châssis (2) pliant muni de moyens de déplacement (9-12) et au moins une armature (390) qui peut être retirée du châssis et qui est munie de moyens permettant de soutenir un enfant, dans laquelle l'armature (390) est munie d'une barre-poussoir inclinable (40) et est réversible par rapport au châssis (2).

2. Poussette-landau selon la revendication 1, dans laquelle la barre-poussoir peut être basculée.

3. Poussette-landau selon la revendication 2, dans laquelle l'armature comprend une structure (41) sur laquelle peuvent être montés les moyens permettant de soutenir l'enfant.

4. Poussette-landau selon la revendication 3, dans laquelle la structure (41) peut être réutilisée pour différentes fonctions de soutien de l'enfant.

5. Poussette-landau selon la revendication 3 ou la revendication 4, dans laquelle l'armature (41), dans la position accouplée au châssis (2), est inclinable par rapport audit châssis, ou, dans une position de siège enfant, sert d'armature pour le siège enfant, ou, dans une position de porte-bébé, sert d'armature pour le porte-bébé.

6. Poussette-landau selon l'une quelconque des revendications précédentes, dans laquelle le guidon (40) est muni d'un réglage progressif destiné au basculement.

7. Poussette-landau selon l'une quelconque des revendications précédentes, munie de deux moyens destinés à basculer la barre-poussoir, dans laquelle lesdits moyens comprennent de préférence au moins une bague coulissante (66, 67), qui peut de préférence coulisser sur la barre-poussoir.

8. Poussette-landau selon l'une quelconque des revendications précédentes, dans laquelle le guidon (40) est sensiblement en forme de U, dans laquelle les extrémités des montants (62, 63) sont reliées à l'armature (390), dans laquelle les montants (62, 63) en forme de U sont extensibles, dans laquelle les montants (62, 63) ont de préférence une forme télescopique, et dans laquelle la barre-poussoir (40) comprend de préférence un élément destiné à débloquer les montants extensibles.

9. Poussette-landau selon l'une quelconque des revendications précédentes, comprenant des moyens de blocage destinés à bloquer la liaison entre le châssis et l'armature lorsque la barre-poussoir a été incliné.

10. Poussette-landau selon l'une quelconque des revendications précédentes, comprenant des moyens d'accouplement (30, 31) destinés à accoupler l'armature avec le châssis, dans laquelle les moyens d'accouplement peuvent être libérés et sont munis d'un guide vertical (204, 205), dans laquelle le châssis comprend de préférence un guide vertical (204, 205) et l'armature comprend un axe (270) qui peut être reçu dans le guide vertical, ledit guide comprenant de préférence un profilé qui se place dans un renfoncement sensiblement arrondi dans lequel l'axe est reçu par rotation, ledit renfoncement arrondi étant de préférence entouré par un rebord (303, 304) qui vient se fixer sur l'axe dans la position inclinée de la barre-poussoir.

11. Poussette-landau selon l'une quelconque des revendications précédentes, dans laquelle l'actionnement des moyens de repliement du châssis est bloqué lorsque le châssis et l'armature sont accouplés, et dans laquelle les moyens de repliement comprennent de préférence un déclencheur (400), dont le mouvement est bloqué en position d'accouplement, ledit déclencheur étant de préférence guidé par coulissement dans un rail de guidage d'un moyen d'accouplement monté sur le châssis repliable.

12. Poussette-landau selon l'une quelconque des revendications 3 à 11, dans laquelle l'armature (390) comprend un moyen de blocage destiné à bloquer progressivement la structure inclinée (41).

13. Poussette-landau selon l'une quelconque des revendications 3 à 12, comprenant en outre des moyens de montage destinés à monter un siège auto sur la structure (41).

14. Utilisation d'une barre-poussoir (40) selon la revendication 2 pour une poussette-landau destinée à transporter un enfant.
